# EUROPEAN PATENT SPECIFICATION

(11) **EP 4 216 567 B1**
(45) Date of publication and mention of the grant of the patent: **29.10.2025**
(21) Application number: 21884864.6
(22) Date of filing: 28.09.2021
(51) Int. Cl.: H04Q 11/00

(54) **NETWORKING METHOD AND APPARATUS FOR PASSIVE OPTICAL NETWORK**
VERNETZUNGSVERFAHREN UND -VORRICHTUNG FÜR EIN PASSIVES OPTISCHES NETZWERK
PROCÉDÉ ET APPAREIL DE RÉSEAUTAGE POUR RÉSEAU OPTIQUE PASSIF

(30) Priority: 30.10.2020 CN 202011197425
(43) Date of publication of application: 26.07.2023
(73) Proprietor: Huawei Technologies Co., Ltd., Shenzhen, Guangdong 518129 (CN)
(72) Inventor: ZHENG, Gang, Shenzhen, Guangdong 518129 (CN)
(74) Representative: Körber, Martin Hans
(86) International application number: PCT/CN2021/121349
(87) International publication number: WO 2022/089134

(56) References cited:
- CN-A- 101 047 445
- CN-A- 101 123 564
- CN-A- 110 809 203
- CN-A- 110 809 203
- XUMING WU HUAWEI TECHNOLOGIES CO ET AL: "The use cases and requirements of G.FIN;C2", vol. 18/15, 14 April 2020 (2020-04-14), pages 1 - 3, XP044286013, Retrieved from the Internet <URL:https://www.itu.int/ifa/t/2017/sg15/docs/rgm/Q18-200420/C/T17-SG15RGM-Q18-200420-C-0002.docx> [retrieved on 20200414]

## Description

### TECHNICAL FIELD

This application relates to the field of fiber-optic communication technologies, and in particular, to a networking method and apparatus for a passive optical network (passive optical network, PON).

### BACKGROUND

A PON is a passive optical network, and usually includes three parts: an optical line termination (optical line terminal, OLT) at a local end, an optical distribution network (optical distribution network, ODN), and an optical network terminal (optical network terminal, ONT). When the PON is two-layer networking, the two-layer networking includes a primary ONT and an edge ONT, where the primary ONT is connected to an OLT, and the edge ONT is connected to the primary ONT. For example, in FTTR (fiber to the room, FTTR) networking, a home gateway is a primary ONT, an ONT deployed in each room is an edge ONT, and the home gateway manages the edge ONT deployed in each room.

In a related technology, the edge ONT is connected to the primary ONT, and the edge ONT is manually configured as a wireless routing device. Because there are a large quantity of edge ONTs, and each edge ONT needs to be manually configured, networking efficiency of the PON is low.

XUMING WU HUAWEI TECHNOLOGIES CO ET AL: "The use cases and requirements of G.FIN", ITU-T DRAFT; Q18/15-C2 (200420); STUDY PERIOD 2017-2020; STUDY GROUP 15; SERIES C2 discloses use cases for the G.FIN. The ITU G.fin project introduces a novel fibre network to provide connectivity from the residential gateway to the wireless access points in the home. Based on these use cases, some common physical layer requirements are extracted. CN110809203 A discloses (see figures 1-4): a system for expanding an FTTH network by a master-slave ONT, comprising an OLT, a master ONT and a plurality of slave ONTs, and further comprising a PON system of a plurality of slave ONTs virtualized from the master ONT. wherein the PON system replaces the slave ONTs to realize interaction with the OLT and data service forwarding of the OLT; the OLT realizes extension of a network distance by means of the master ONT and the PON system corresponding to the slave ONTs virtualized from the master ONT; the master ONT replies the information acquired by the PON system to the slave ONTs; and the master ONT issues a synchronization status and a heartbeat message to tire slave ONTs.

### SUMMARY

This application provides a networking method and apparatus for a PON, to improve networking efficiency of the PON. Technical solutions are as follows.

According to a first aspect, this application provides a networking method for a PON according to claim 1.

The first networking mode indicates that the first edge ONT is not directly inserted into the primary ONT, but is connected to the primary ONT by using one or more of an optical fiber, a network cable, or a wireless connection. The first networking mode may also be referred to as a split networking mode, an independent networking mode, or the like. The second networking mode indicates that the first edge ONT serves as an extended port of the primary ONT and extends a wireless signal of the primary ONT. The second networking mode may also be referred to as an integration networking mode or the like.

According to the solution shown in this application, the PON includes the primary ONT and the at least one edge ONT, and the at least one edge ONT includes the first edge ONT. The first edge ONT may detect the networking mode with the primary ONT; and when the networking mode is the first networking mode, the first edge ONT receives the configuration content delivered by the primary ONT, and configures the first edge ONT based on the configuration content. Alternatively, when detecting that the networking mode is the second networking mode, the first edge ONT configures the first edge ONT as the bridge ONT of the primary ONT, or enters the sleep mode. In this way, an edge ONT in the PON can automatically detect a networking mode with the primary ONT, and set a state of the edge ONT without manual setting, so that networking efficiency of the PON can be improved.

In a possible implementation, the configuration content includes one or more of an operating mode, a service configuration, or a network configuration. The operating mode is a bridge mode or a routing mode. The service configuration indicates a service (such as a video, a voice, and a text) performed by the first edge ONT, and the network configuration indicates network information of the first edge ONT, such as a bandwidth. In this way, the primary ONT can perform comprehensive configuration on a managed edge ONT.

In a possible implementation, when the first edge ONT detects that the first edge ONT is not powered by the primary ONT, and the first edge ONT is capable of receiving a downlink packet sent by the primary ONT, the first edge ONT determines that the networking mode with the primary ONT is the first networking mode; or when the first edge ONT detects that the first edge ONT is powered by the primary ONT or is connected to the primary ONT through a high-speed interface, the first edge ONT determines that the networking mode with the primary ONT is the second networking mode.

According to the solution shown in this application, the first edge ONT may detect whether the first edge ONT is powered by the primary ONT. When detecting that the first edge ONT is powered by the primary ONT, the first edge ONT may determine that the networking mode is the second networking mode. When detecting that the first edge ONT is not powered by the primary ONT, the first ONT may further determine whether the downlink packet sent by the primary ONT is received. If the first edge ONT receives the downlink packet sent by the primary ONT, the first edge ONT determines that the networking mode is the first networking mode. Alternatively, the first edge ONT may detect whether the first edge ONT is connected to the primary ONT through the high-speed interface. When detecting that the first edge ONT is connected to the primary ONT through the high-speed interface, the first edge ONT may determine that the networking mode is the second networking mode. Herein, that the first edge ONT detects whether the first edge ONT is powered by the primary ONT may be that the first edge ONT detects whether an input current module connected to the primary ONT is turned on. When the input current module is turned on, it indicates that the first edge ONT is powered by the primary ONT. Otherwise, it indicates that the first edge ONT is not powered by the primary ONT. In this way, the networking mode can be accurately determined.

In a possible implementation, when the operating mode is the routing mode, the method further includes: When receiving a first uplink packet sent by a terminal device connected to the first edge ONT, the first edge ONT translates a source internet protocol (internet protocol, IP) address in the first uplink packet into a public network IP address, and forwards the first uplink packet on which address translation is performed to the primary ONT. Alternatively, when receiving a first downlink packet sent by the primary ONT, the first edge ONT translates a destination IP address in the first downlink packet into a private network IP address, and forwards the first downlink packet on which address translation is performed to a terminal device connected to the first edge ONT.

According to the solution shown in this application, the first edge ONT is in the routing mode. In other words, the first edge ONT is used as an independent wireless routing device, and the primary ONT is also used as an independent wireless routing device. A processing process in which the terminal device sends the first uplink packet to an external network is as follows: After accessing the first edge ONT, the terminal device sends the first uplink packet to the first edge ONT, where the source IP address in the first uplink packet is a private network IP address of the terminal device. When receiving the first uplink packet, the first edge ONT may translate the source IP address in the first uplink packet into the corresponding public network IP address. Then, the first edge ONT forwards the translated first uplink packet to the primary ONT. The primary ONT may send the translated first uplink packet to the outside, to send the translated first uplink packet to the external network. Alternatively, the primary ONT may perform secondary translation on the public network IP address in the translated first uplink packet, to translate the public network IP address in the translated first uplink packet into a public network IP address stored in the primary ONT, and then send the first uplink packet on which secondary translation is performed to the outside, to send the first uplink packet to the external network. A processing process in which the terminal device receives the first downlink packet sent by an external network is as follows: The primary ONT receives the first downlink packet sent by the external network, and the primary ONT may forward the first downlink packet to the first edge ONT, or the primary ONT may translate the destination IP address in the first downlink packet into the public network IP address stored in the first edge ONT, and then forward the first downlink packet on which address translation is performed to the first edge ONT. The first edge ONT may correspondingly translate the destination IP address in the received first downlink packet into the corresponding private network IP address of the terminal device, and forward the first downlink packet on which address translation is performed to the terminal device. In this way, the first edge ONT may be independently used as a wireless routing device.

In a possible implementation, when the operating mode is the bridge mode, or after the first edge ONT is configured as the bridge ONT of the primary ONT, the method further includes: When receiving a second uplink packet sent by a terminal device connected to the first edge ONT, the first edge ONT forwards the second uplink packet to the primary ONT. Alternatively, when receiving a second downlink packet sent by the primary ONT, the first edge ONT forwards the second downlink packet to a terminal device connected to the first edge ONT.

According to the solution shown in this application, a process in which the terminal device sends the second uplink packet to an external network is as follows: After the terminal device accesses the first edge ONT, the terminal device sends the second uplink packet to the first edge ONT, and the first edge ONT sends the received second uplink packet to the primary ONT without processing the second uplink packet. If the primary ONT and the first edge ONT are in a layer 2 bridge mode, the primary ONT may forward the second uplink packet based on a media access control (media access control, MAC) address in the second uplink packet, without processing the second uplink packet. If the primary ONT and the first edge ONT are in a layer 3 bridge mode, the primary ONT translates a source IP address in the second uplink packet into a corresponding public network IP address, and then sends the translated second uplink packet to the external network.

A process in which the terminal device receives the second downlink packet sent by an external network is as follows: The external network sends the second downlink packet to the primary ONT. If the primary ONT and the first edge ONT are in a layer 2 bridge mode, the primary ONT may forward the second downlink packet to the first edge ONT based on a MAC address in the second downlink packet. If the primary ONT and the first edge ONT are in a layer 3 bridge mode, the primary ONT translates a destination IP address in the second downlink packet into a corresponding private network IP address of the terminal device, and then sends the translated second downlink packet to the first edge ONT. The first edge ONT sends, based on the private network IP address, the second downlink packet to the terminal device indicated by the private network IP address. In this way, when the first edge ONT in the bridge mode, the first edge ONT may also perform packet forwarding processing.

In a possible implementation, when the first edge ONT detects that the networking mode is the first networking mode, the method further includes: The first edge ONT receives a discovery message broadcast by the primary ONT, where the discovery message includes first identifier information, and the first identifier information is identifier information of the primary ONT; and after determining that the first identifier information is stored identifier information of a known primary ONT, the first edge ONT sends second identifier information to the primary ONT, where the second identifier information is identifier information of the first edge ONT. That the first edge ONT receives the configuration content delivered by the primary ONT includes: The first edge ONT receives the configuration content that is sent by the primary ONT after the primary ONT determines, based on the second identifier information, that the first edge ONT is a known edge ONT.

According to the solution shown in this application, the first edge ONT receives the discovery message broadcast by the primary ONT, where the discovery message includes the identifier information of the primary ONT, namely, the first identifier information. After determining that the first identifier information is identifier information of a known primary ONT, the first edge ONT sends the second identifier information to the primary ONT, where the second identifier information is the identifier information of the first edge ONT. After identifying that the second identifier information is identifier information of a known edge ONT, the primary ONT sends the configuration content to the first edge ONT. The first edge ONT receives the configuration content. In this way, when an edge ONT is added to the primary ONT, two-way authentication can be implemented, and access of another non-agreed edge ONT is prevented. Therefore, PON networking is more secure.

In a possible implementation, when the first edge ONT detects that the networking mode with the primary ONT is the first networking mode, a connection between the first edge ONT and the primary ONT is one or more of a PON connection, a peer-to-peer (peer-to-peer, P2P) optical fiber connection, a P2P network cable connection, or a wireless connection.

In a possible implementation, when the first edge ONT detects that the networking mode is the second networking mode, the first edge ONT is inserted into a physical interface of the primary ONT.

According to a second aspect, this application provides a networking method for a PON according to claim 9.

According to the solution shown in this application, the primary ONT detects the networking mode. When detecting that the networking mode is the first networking mode, the primary ONT delivers the configuration content to the first edge ONT. When detecting that the networking mode is the second networking mode, the primary ONT powers the first edge ONT. In this way, the primary ONT can automatically detect the networking mode, and automatically configure an edge ONT, or automatically power an edge ONT without manual setting, so that networking efficiency of the PON can be improved.

In a possible implementation, that the primary ONT detects a networking mode includes: When detecting that a target function is enabled, the primary ONT determines that the networking mode is the first networking mode; or when detecting that a target function is not enabled, the primary ONT determines that the networking mode is the second networking mode, where the target function is a function for managing the at least one edge ONT.

According to the solution shown in this application, the target function is an OLT function, namely, a function for managing an edge ONT. The target function corresponds to a virtual module in the primary ONT. The virtual module is controlled to work and stop working, to implement enabling or disabling of the target function.

A user may set, in advance, whether the target function of the primary ONT is enabled or disabled. Optionally, the user may connect to the primary ONT by using a terminal device, and configure whether the target function of the primary ONT is enabled. Alternatively, a physical button is provided on the primary ONT, and the user may control enabling and disabling of the target function by using the physical button.

The primary ONT may detect whether the target function is enabled. When detecting that the target function is enabled, the primary ONT determines that the networking mode is the first networking mode. The first networking mode may also be referred to as a split networking mode, an independent networking mode, or the like. When it is detected that the target function is not enabled, it is determined that the networking mode is the second networking mode. The second networking mode indicates that the first edge ONT serves as an extended port of the primary ONT and extends a wireless signal of the primary ONT. The second networking mode may also be referred to as an integration networking mode or the like. In this way, the networking mode can be accurately determined.

In a possible implementation, when the primary ONT detects that the networking mode is the first networking mode, the method further includes: The primary ONT controls a power supply function of the primary ONT to be disabled, or the primary ONT hibernates.

The power supply function is for powering the at least one edge ONT.

According to the solution shown in this application, when the networking mode is the first networking mode, the primary ONT may control the power supply function of the primary ONT to be disabled, or the primary ONT hibernate, to reduce power consumption of the primary ONT.

In a possible implementation, the configuration content includes one or more of an operating mode, a service configuration, or a network configuration. The operating mode is a bridge mode or a routing mode.

In a possible implementation, when the primary ONT detects that the networking mode is the first networking mode, the method further includes: The primary ONT broadcasts a discovery message, where the discovery message includes first identifier information, and the first identifier information is identifier information of the primary ONT. The primary ONT receives second identifier information sent by the first edge ONT, where the second identifier information is identifier information of the first edge ONT. That the primary ONT delivers configuration content to the first edge ONT includes: When the second identifier information is stored identifier information of a known edge ONT, the primary ONT sends the configuration content to the first edge ONT.

According to the solution shown in this application, when the primary ONT detects that the networking mode is the first networking mode, the primary ONT may broadcast the discovery message, where the discovery message includes the identifier information of the primary ONT, namely, the first identifier information. The first edge ONT receives the discovery message, and sends the second identifier information of the first edge ONT to the primary ONT when determining that the first identifier information is identifier information of a known primary ONT. When determining that the second identifier information is identifier information of a known edge ONT, the primary ONT sends the configuration content to the first edge ONT, where the configuration content is for configuring the first edge ONT. In this way, when an edge ONT is added to the primary ONT, two-way authentication can be implemented, and access of another non-agreed edge ONT is prevented. Therefore, PON networking is more secure.

According to a third aspect, this application provides an edge ONT according to claim 14.

According to a fourth aspect, this application provides a computer-readable storage medium. The computer-readable storage medium stores computer instructions, and when the computer instructions in the computer-readable storage medium are executed by an edge ONT, the edge ONT is enabled to perform the method in the first aspect and the possible implementations of the first aspect, or the edge ONT is enabled to implement a function of the apparatus in the third aspect and the possible implementations of the third aspect.

According to a fifth aspect, this application provides a computer program product including computer instructions. When the computer program product runs on an edge ONT, the edge ONT is enabled to perform the method in the first aspect and the possible implementations of the first aspect, or the edge ONT is enabled to implement a function of the apparatus in the third aspect and the possible implementations of the third aspect.

According to a sixth aspect, this application provides a primary ONT according to claim 15.

According to a seventh aspect, this application provides a computer-readable storage medium. The computer-readable storage medium stores computer instructions, and when the computer instructions in the computer-readable storage medium are executed by a primary ONT, the primary ONT is enabled to perform the method in the second aspect and the possible implementations of the second aspect, or the primary ONT is enabled to implement a function of the apparatus in the fourth aspect and the possible implementations of the fourth aspect.

According to an eighth aspect, this application provides a computer program product including computer instructions. When the computer program product runs on a primary ONT, the primary ONT is enabled to perform the method in the second aspect and the possible implementations of the second aspect, or the primary ONT is enabled to implement a function of the apparatus in the fourth aspect and the possible implementations of the fourth aspect.

According to a ninth aspect, this application provides a PON system, where the PON system includes a primary ONT and at least one edge ONT. Each of the at least one edge ONT is configured to implement the networking method in the first aspect, and the primary ONT is configured to implement the networking method in the second aspect.

### BRIEF DESCRIPTION OF DRAWINGS

FIG. 1 is a diagram of an architecture of a PON system according to an example embodiment of this application;
FIG. 2 is a schematic diagram of FTTR networking according to an example embodiment of this application;
FIG. 3 is a schematic diagram of a structure of a primary ONT according to an example embodiment of this application;
FIG. 4 is a schematic diagram of a structure of an edge ONT according to an example embodiment of this application;
FIG. 5 is a schematic flowchart of a networking method for a PON according to an example embodiment of this application;
FIG. 6 is a schematic flowchart of a networking method for a PON according to an example embodiment of this application;
FIG. 7 is a schematic diagram of networking of a PON in a first networking mode according to an example embodiment of this application;
FIG. 8 is a schematic diagram of networking of a PON in a second networking mode according to an example embodiment of this application;
FIG. 9 is a schematic diagram of networking of a PON in a second networking mode according to an example embodiment of this application;
FIG. 10 is a schematic diagram of a procedure in which a primary ONT configures an edge ONT according to an example embodiment of this application;
FIG. 11 is a schematic diagram of a structure of a networking apparatus for a PON according to an example embodiment of this application;
FIG. 12 is a schematic diagram of a structure of a networking apparatus for a PON according to an example embodiment of this application;
FIG. 13 is a schematic diagram of a structure of a networking apparatus for a PON according to an example embodiment of this application;
FIG. 14 is a schematic diagram of a structure of a networking apparatus for a PON according to an example embodiment of this application; and
FIG. 15 is a schematic diagram of a structure of a networking apparatus for a PON according to an example embodiment of this application.

### DESCRIPTION OF EMBODIMENTS

To make the objectives, technical solutions, and advantages of this application clearer, the following further describes the implementations of this application in detail with reference to the accompanying drawings.

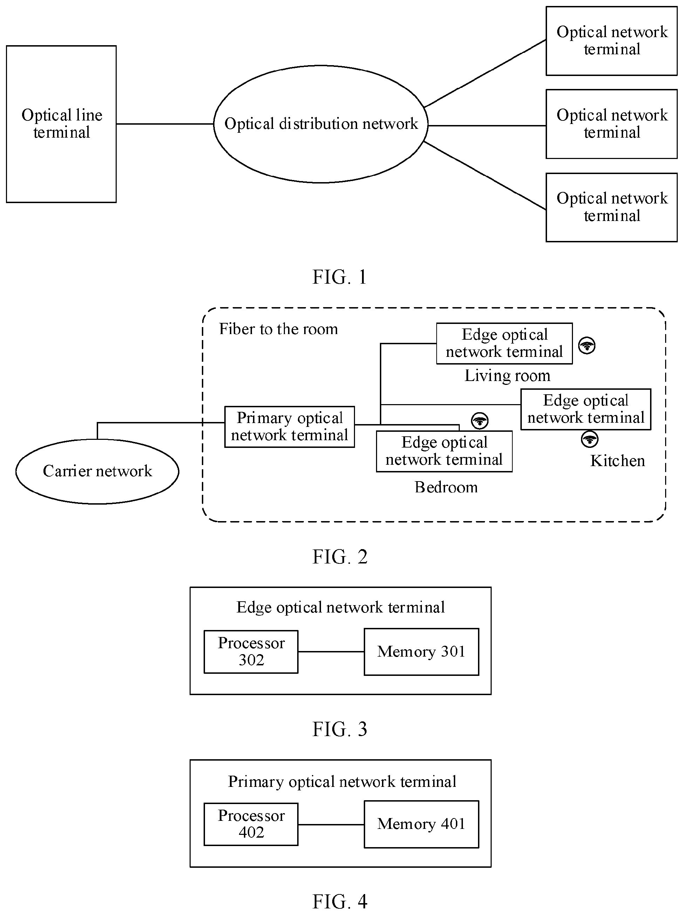

For ease of understanding of embodiments of this application, the following first describes concepts of terms used.
1. A PON is a passive optical network, and usually includes three parts: an OLT at a local end, an ODN, and an ONT. The ONT may alternatively be an optical network unit (optical network unit, ONU). As shown in FIG. 1, a plurality of ONTs are connected to a PON port of a same OLT via an ODN.
2. FTTR means to extend an optical fiber to not only an indoor area of a user, but also each room of the user, where a wireless routing device is installed in the room. In this way, a distance between a terminal device of the user and the wireless routing device is shortened, so that quality of a wireless signal is ensured. Optionally, a networking mode of the FTTR may be as follows: As shown in FIG. 2, a network carrier provides a gigabit access bandwidth for a user by using a PON. A home gateway (namely, a primary ONT) may be deployed in an information box, and an optical fiber is connected to each room through a pipe-hole resource reserved during decoration. The home gateway is connected to an ONT in each room through the optical fiber deployed in the home. A wireless signal of the ONT in each room needs to cover only the room, and each terminal device at home selects an ONT closest to the terminal device for connection. Because a coverage range of each ONT is reduced, a plurality of ONTs can cover every part of the room. In this way, based on an FTTR networking system, the terminal device of the user can fully enjoy improved network experience brought by an increase of the access bandwidth.

To perform PON networking in an efficient manner, this application provides a networking method for a PON, where the PON is two-layer networking. The PON includes a primary ONT and at least one edge ONT, and the at least one edge ONT includes a first edge ONT. For example, the networking method for the PON is applied to the FTTR, where the primary ONT is the home gateway, and the edge ONT is the ONT in each room. The ONT in this application can implement a wireless routing function, and can provide a wireless signal without connecting to a router.

The following describes a structure of the edge ONT. As shown in FIG. 3, the edge ONT may include a memory 301 and a processor 302. The memory 301 may be a read-only memory (read-only memory, ROM), a static storage device, a dynamic storage device, or a random access memory (random access memory, RAM). The memory 301 may store computer instructions. When the computer instructions stored in the memory 301 are executed by the processor 302, the processor 302 is configured to perform the networking method for the The memory 301 may further store data.

The processor 302 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits.

Optionally, the edge ONT may further include a communication interface and a bus. Communication connections between the memory 301, the processor 302, and the communication interface are implemented through the bus. The communication interface uses a transceiver module such as, but not limited to, a transceiver, to implement communication between the edge ONT and another device. For example, the edge ONT may communicate with the primary ONT through the communication interface.

The bus may include a path for transmitting information between components (for example, the memory 301, the processor 302, and the communication interface) of the edge ONT.

The following describes a structure of the primary ONT. As shown in FIG. 4, the primary ONT may include a memory 401 and a processor 402. The memory 401 may be a ROM, a static storage device, a dynamic storage device, or a RAM. The memory 401 may store computer instructions. When the computer instructions stored in the memory 401 are executed by the processor 402, the processor 402 is configured to perform the networking method for the PON. The memory 401 may further store data.

The processor 402 may use a common CPU, a microprocessor, an ASIC, a GPU, or one or more integrated circuits.

Optionally, the primary ONT may further include a communication interface and a bus. Communication connections between the memory 401, the processor 402, and the communication interface are implemented through the bus. The communication interface uses a transceiver module such as, but not limited to, a transceiver, to implement communication between the primary ONT and another device. For example, the primary ONT may communicate with the edge ONT through the communication interface.

The bus may include a path for transmitting information between components (for example, the memory 401, the processor 402, and the communication interface) of the primary ONT.

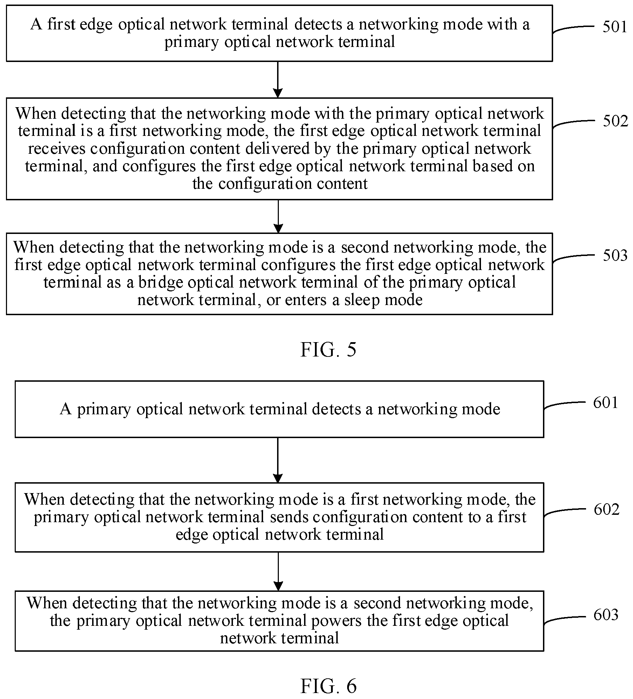

As shown in FIG. 5, a procedure of an edge ONT in a networking method for a PON may be as follows.

Step 501: A first edge ONT detects a networking mode with a primary ONT.

In this embodiment, when the first edge ONT is powered on and started, the first edge ONT detects the networking mode between the first edge ONT and the primary ONT. Alternatively, when exiting a sleep mode, the first edge ONT detects the networking mode between the first edge ONT and the primary ONT.

In a possible implementation, in step 501, the first edge ONT may determine the networking mode with the primary ONT in the following manner.

When the first edge ONT detects that the first edge ONT is not powered by the primary ONT, and the first edge ONT is capable of receiving a downlink packet sent by the primary ONT, the first edge ONT determines that the networking mode with the primary ONT is a first networking mode; or when the first edge ONT detects that the first edge ONT is powered by the primary ONT or is connected to the primary ONT through a high-speed interface, the first edge ONT determines that the networking mode with the primary ONT is a second networking mode.

The high-speed interface is a local network interface of the first edge ONT, and is configured to connect the first edge ONT to the primary ONT when the first edge ONT is networked with the primary ONT in the second networking mode.

In this embodiment, the first edge ONT may detect whether the first edge ONT is powered by the primary ONT. When detecting that the first edge ONT is powered by the primary ONT, the first edge ONT may determine that the networking mode is the second networking mode. When detecting that the first edge ONT is not powered by the primary ONT, the first ONT may further determine whether the downlink packet sent by the primary ONT is received. If the first edge ONT receives the downlink packet sent by the primary ONT, the first edge ONT determines that the networking mode is the first networking mode. On the contrary, if the first edge ONT does not receive the downlink packet sent by the primary ONT, the first edge ONT may not determine that the networking mode is the first networking mode. Alternatively, the first edge ONT may detect whether the first edge ONT is connected to the primary ONT through the high-speed interface. When detecting that the first edge ONT is connected to the primary ONT through the high-speed interface, the first edge ONT may determine that the networking mode is the second networking mode. Herein, that the first edge ONT detects whether the first edge ONT is powered by the primary ONT may be that the first edge ONT detects whether an input current module connected to the primary ONT is turned on. When the input current module is turned on, it indicates that the first edge ONT is powered by the primary ONT. Otherwise, it indicates that the first edge ONT is not powered by the primary ONT.

In this way, the networking mode between the first edge ONT and the primary ONT can be accurately determined based on a power supply condition.

Step 502: When detecting that the networking mode with the primary ONT is the first networking mode, the first edge ONT receives configuration content delivered by the primary ONT, and configures the first edge ONT based on the configuration content.

The first networking mode indicates that the first edge ONT is not directly inserted into the primary ONT, but is connected to the primary ONT by using one or more of an optical fiber, a network cable, or a wireless connection. The first networking mode may also be referred to as a split networking mode, an independent networking mode, a separate networking mode, or the like.

In this embodiment, when detecting that the networking mode with the primary ONT is the first networking mode, the first edge ONT receives the configuration content delivered by the primary ONT, and then performs configuration by using the configuration content.

In a possible implementation, the configuration content may include one or more of an operating mode, a service configuration, or a network configuration. The operating mode is a bridge mode or a routing mode, the service configuration indicates a service (such as a video, a voice, and a text) performed by the first edge ONT, and the network configuration indicates network information of the first edge ONT, such as a bandwidth. The first edge ONT configures the operating mode in the configuration content as an operating mode of the first edge ONT, determines the service configuration in the configuration content as a service that can be performed by the first edge ONT, and configures a network of the first edge ONT by using the network configuration in the configuration content.

In addition, when detecting that the networking mode with the primary ONT is the first networking mode, the first edge ONT may alternatively obtain pre-stored configuration content to perform configuration. For example, when a user uses a terminal device to connect to the first edge ONT through a network port of the first edge ONT or in a wireless manner, and configures, in the first edge ONT, the operating mode of the first edge ONT to be the bridge mode, the first edge ONT configures the operating mode of the first edge ONT to be the bridge mode. For another example, when a user uses a terminal device to connect to the first edge ONT through a network port of the first edge ONT or in a wireless manner, and configures, in the first edge ONT, the operating mode of the first edge ONT to be the routing mode, the first edge ONT configures the operating mode of the first edge ONT to be the routing mode. In this case, the first edge ONT is a wireless routing device, and is configured to provide a wireless signal for the terminal device of the user.

In a possible implementation, when the operating mode of the first edge ONT is the routing mode in step 502, a packet transmission process may be as follows.

When receiving a first uplink packet sent by a terminal device, the first edge ONT translates a source IP address in the first uplink packet into a public network IP address, and forwards the first uplink packet on which address translation is performed to the primary ONT. Alternatively, when receiving a first downlink packet sent by the primary ONT, the first edge ONT translates a destination IP address in the first downlink packet into a private network IP address, and forwards the first downlink packet on which address translation is performed to a terminal device.

In this embodiment, the first edge ONT is in the routing mode. In other words, the first edge ONT is used as an independent wireless routing device, and the primary ONT is also used as an independent wireless routing device.

A processing process in which the terminal device sends an uplink packet (where the uplink packet is referred to as the first uplink packet) to an external network is as follows: After accessing the first edge ONT, the terminal device sends the first uplink packet to the first edge ONT, where the source IP address in the first uplink packet is a private network IP address of the terminal device. When receiving the first uplink packet, the first edge ONT may translate the source IP address in the first uplink packet into the corresponding public network IP address. Then, the first edge ONT forwards the translated first uplink packet to the primary ONT. The primary ONT may send the translated first uplink packet to the outside, to send the translated first uplink packet to the external network. Alternatively, the primary ONT may perform secondary translation on the public network IP address in the translated first uplink packet, to translate the public network IP address in the translated first uplink packet into a public network IP address stored in the primary ONT, and then send the first uplink packet on which secondary translation is performed to the outside, to send the first uplink packet to the external network.

A processing process in which the terminal device receives a downlink packet (where the downlink packet is referred to as the first downlink packet) sent by an external network is as follows: The primary ONT receives the first downlink packet sent by the external network, and the primary ONT may forward the first downlink packet to the first edge ONT, or the primary ONT may translate the destination IP address in the first downlink packet into the public network IP address stored in the first edge ONT, and then forward the first downlink packet on which address translation is performed to the first edge ONT. The first edge ONT may correspondingly translate the destination IP address in the received first downlink packet into the corresponding private network IP address of the terminal device, and forward the first downlink packet on which address translation is performed to the terminal device.

Step 503: When detecting that the networking mode is the second networking mode, the first edge ONT configures the first edge ONT as a bridge ONT of the primary ONT, or enters a sleep mode.

The second networking mode indicates that the first edge ONT is directly inserted into the primary ONT. The second networking mode indicates that the first edge ONT serves as an extended port of the primary ONT and extends a wireless signal of the primary ONT. The second networking mode may also be referred to as an integration networking mode, an integrated networking mode, or the like.

In this embodiment, when the first edge ONT detects that the networking mode is the second networking mode, a user uses a terminal device to connect to the first edge ONT through a network port of the first edge ONT or in a wireless manner, and configures, in the first edge ONT, the operating mode of the first edge ONT to be the bridge mode. The first edge ONT configures the first edge ONT as the bridge ONT connected to the primary ONT. In this case, the primary ONT is also a wireless routing device.

Alternatively, when the first edge ONT detects that the networking mode is the second networking mode, a user uses a terminal device to connect to the first edge ONT through a network port of the first edge ONT or in a wireless manner, and configures, in the first edge ONT, the operating mode of the first edge ONT to be the sleep mode. The first edge ONT may set the first edge ONT to be in the sleep mode, and does not perform task service processing.

Optionally, when the first edge ONT is in the second networking mode, a physical interface is provided on the primary ONT, and the first edge ONT is directly inserted into the physical interface of the primary ONT. In addition, the primary ONT serves as a power supply of the first edge ONT, and may power the first edge ONT through the physical interface.

Optionally, when the first edge ONT is in the second networking mode, a user may use a terminal device to connect to the primary ONT through a network port of the primary ONT or by using a wireless connection, and configure, in the primary ONT, a bandwidth of the first edge ONT and a service performed by the first edge ONT. After the configuration is completed, the primary ONT may send, to the first edge ONT, configuration content of the user for the first edge ONT. The first edge ONT performs configuration by using the configuration content. Certainly, the user may alternatively connect to the first edge ONT through a network port of the first edge ONT or by using a wireless connection, to configure the first edge ONT.

In a possible implementation, after the first edge ONT is configured as the bridge ONT of the primary ONT in step 503, or when the operating mode of the first edge ONT is the bridge mode in step 502, a packet transmission procedure may be as follows.

When receiving a second uplink packet sent by a terminal device, the first edge ONT forwards the second uplink packet to the primary ONT. Alternatively, when receiving a second downlink packet sent by the primary ONT, the first edge ONT forwards the second downlink packet to a terminal device.

In this embodiment, a process in which the terminal device sends an uplink packet (where the uplink packet is referred to as the second uplink packet) to an external network is as follows: After the terminal device accesses the first edge ONT, the terminal device sends the second uplink packet to the first edge ONT, and the first edge ONT sends the received second uplink packet to the primary ONT without processing the second uplink packet. If the primary ONT and the first edge ONT are in a layer 2 bridge mode, the primary ONT may forward the second uplink packet based on a MAC address in the second uplink packet, without processing the second uplink packet. If the primary ONT and the first edge ONT are in a layer 3 bridge mode, the primary ONT translates a source IP address in the second uplink packet into a corresponding public network IP address, and then sends the translated second uplink packet to the external network.

A process in which the terminal device receives a downlink packet (where the downlink packet is referred to as the second downlink packet) sent by an external network is as follows: The external network sends the second downlink packet to the primary ONT. If the primary ONT and the first edge ONT are in a layer 2 bridge mode, the primary ONT may forward the second downlink packet to the first edge ONT based on a MAC address in the second downlink packet. If the primary ONT and the first edge ONT are in a layer 3 bridge mode, the primary ONT translates a destination IP address in the second downlink packet into a corresponding private network IP address of the terminal device, and then sends the translated second downlink packet to the first edge ONT. The first edge ONT sends, based on the private network IP address, the second downlink packet to the terminal device indicated by the private network IP address.

It should be noted that, if the primary ONT and the first edge ONT are in the layer 3 bridge mode, the primary ONT and the first edge ONT are in a same network segment, and are in a same local area network. It should be further noted that a case in which the terminal device accesses the first edge ONT is used for description herein. Certainly, some terminal devices may alternatively access the primary ONT directly. In this case, a transmission packet does not pass through the first edge ONT.

It should be further noted that step 502 and step 503 are not subject to a sequence.

In this way, the first edge ONT can automatically detect the networking mode with the primary ONT, and set a state of the first edge ONT without manual setting, so that networking efficiency of the PON can be improved.

As shown in FIG. 6, in an embodiment of this application, a procedure of a primary ONT in a networking method for a PON is provided.

Step 601: A primary ONT detects a networking mode.

In this embodiment, after being started, the primary ONT detects the networking mode of the primary ONT.

In a possible implementation, processing of detecting the networking mode by the primary ONT may be as follows.

When detecting that a target function is enabled, the primary ONT determines that the networking mode is a first networking mode; or when detecting that a target function is not enabled, the primary ONT determines that the networking mode is a second networking mode.

The target function is an OLT function, namely, a function for managing an edge ONT. The target function corresponds to a virtual module in the primary ONT. The virtual module is controlled to work and stop working, to implement enabling or disabling of the target function.

In this embodiment, a user may set, in advance, whether the target function of the primary ONT is enabled or disabled. Specifically, the user may connect to the primary ONT by using a terminal device, and configure whether the target function of the primary ONT is enabled. Alternatively, a physical button is provided on the primary ONT, and the user may control enabling and disabling of the target function by using the physical button.

The primary ONT may detect whether the target function is enabled. When detecting that the target function is enabled, the primary ONT determines that the networking mode is the first networking mode. The first networking mode may also be referred to as a split networking mode, an independent networking mode, or the like. When it is detected that the target function is not enabled, it is determined that the networking mode is the second networking mode. The second networking mode indicates that a first edge ONT serves as an extended port of the primary ONT and extends a wireless signal of the primary ONT. The second networking mode may also be referred to as an integration networking mode or the like.

Step 602: When detecting that the networking mode is the first networking mode, the primary ONT delivers configuration content to the first edge ONT.

In this embodiment, when the primary ONT detects that the networking mode is the first networking mode, the primary ONT may perform adding processing on the first edge ONT, and after the first edge ONT is successfully added, the primary ONT may send the configuration content to the first edge ONT. The configuration content may include one or more of an operating mode, a service configuration, or a network configuration.

In addition, the primary ONT controls a power supply function of the primary ONT to be disabled, or the primary ONT hibernates. The power supply function is for powering at least one edge ONT in the PON. Because the at least one edge ONT does not need to be powered, the power supply function is disabled, or the primary ONT hibernates, to reduce power consumption of the primary ONT.

Step 603: When detecting that the networking mode is a second networking mode, the primary ONT powers the first edge ONT.

In this embodiment, when the primary ONT detects that the networking mode is the second networking mode, because the primary ONT is directly connected to the first edge ONT, a power supply module that powers an edge ONT may be started to power the first edge ONT.

It should be noted that step 602 and step 603 are not subject to a sequence.

In this way, in the procedure in FIG. 6, the primary ONT can automatically detect the networking mode, and automatically perform processing of configuring an edge ONT, or automatically power an edge ONT without manual setting, so that networking efficiency of the PON can be improved.

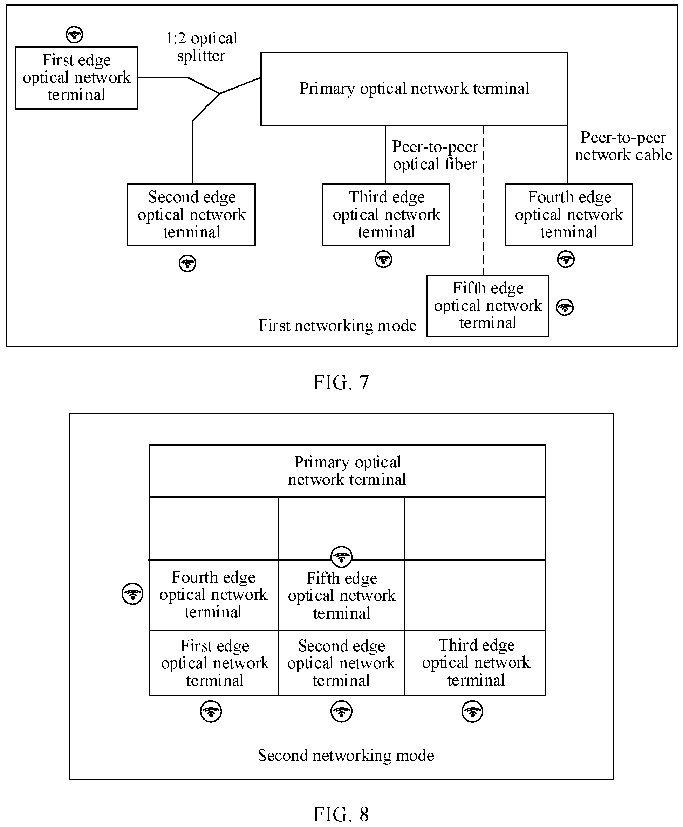

In a possible implementation, with reference to the procedures in FIG. 5 and FIG. 6, each edge ONT in the PON is independently powered, and a connection between each edge ONT and the primary ONT may be one or more of a PON connection, a P2P optical fiber connection, a P2P network cable connection, or a wireless connection. In this case, the edge ONT detects that a networking mode with the primary ONT is the first networking mode, and each edge ONT works in the bridge mode or the routing mode. For example, as shown in FIG. 7, a PON includes five edge ONTs. The five edge ONTs are a first edge ONT to a fifth edge ONT. The first edge ONT and the second edge ONT implement a PON connection to a primary ONT by using a 1:2 optical splitter. The third edge ONT and the primary ONT are connected by using a P2P optical fiber. The fourth edge ONT and the primary ONT are connected by using a P2P network cable. The fifth edge ONT and the primary ONT are connected by using a wireless connection.

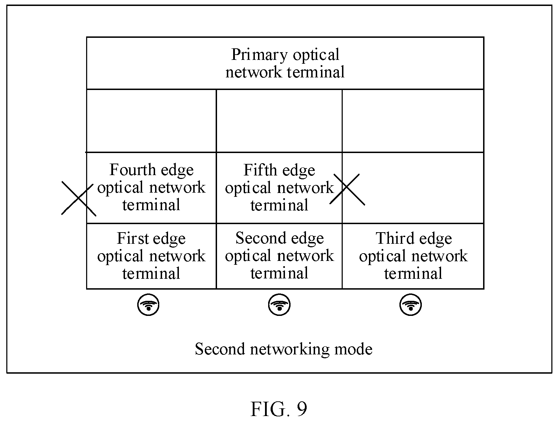

In a possible implementation, with reference to the procedures in FIG. 5 and FIG. 6, a plurality of physical interfaces are provided on the primary ONT, and all edge ONTs in the PON are directly inserted into different physical interfaces of the primary ONT, and are powered by the primary ONT. In this case, the edge ONT detects that a networking mode with the primary ONT is the second networking mode, and each edge ONT works in the bridge mode or the sleep mode. For example, as shown in FIG. 8, nine edge ONTs may be inserted into a primary ONT. A PON includes five edge ONTs. The five edge ONTs are a first edge ONT to a fifth edge ONT. The first edge ONT to the fifth edge ONT are all inserted into the primary ONT and work in a bridge mode. For another example, as shown in FIG. 9, nine edge ONTs may be inserted into a primary ONT. A PON includes five edge ONTs. The five edge ONTs are a first edge ONT to a fifth edge ONT. The first edge ONT to the third edge ONT are all inserted into the primary ONT and work in a bridge mode, and the fourth edge ONT and the fifth edge ONT work in a sleep mode.

In a possible implementation, a part of edge ONTs in the PON are independently powered, where the part of edge ONTs work in the bridge mode or the routing mode, and the remaining edge ONTs are powered by the primary ONT, where the remaining edge ONTs work in the bridge mode.

With reference to the procedures in FIG. 5 and FIG. 6, a PON is further provided. The PON includes a primary ONT and at least one edge ONT, and the primary ONT and the at least one edge ONT cooperate with each other to form an integrated device. There are a plurality of networking modes between the primary ONT and the at least one edge ONT. Optionally, the plurality of networking modes may include a first networking mode and a second networking mode.

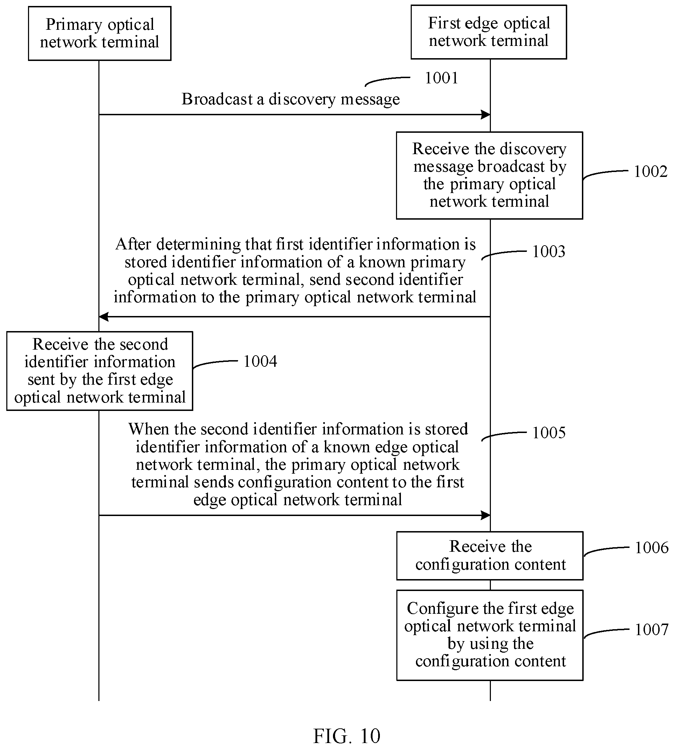

As shown in FIG. 10, in an embodiment of this application, a processing procedure in which when a first edge ONT detects that a networking mode with a primary ONT is a first networking mode, the primary ONT performs authentication and configuration on the first edge ONT is further provided.

Step 1001: A primary ONT broadcasts a discovery message, where the discovery message includes first identifier information, and the first identifier information is identifier information of the primary ONT.

In this embodiment, when the primary ONT detects that a networking mode is a first networking mode and a quantity of currently accessing edge ONTs is less than a maximum quantity of edge ONTs that are allowed to access the primary ONT, the primary ONT periodically broadcasts the discovery message. The discovery message includes the first identifier information, the first identifier information is the identifier information of the primary ONT, and the first identifier information may be a device serial number, a MAC address, or the like of the primary ONT. Certainly, in some cases, a quantity of edge ONTs connected to the primary ONT is not limited. Therefore, when detecting that the networking mode is the first networking mode, the primary ONT may periodically broadcast the discovery message until detecting that the networking mode is a second networking mode.

In addition, after the quantity of currently accessing edge ONTs is equal to the maximum quantity of edge ONTs that are allowed to access the primary ONT, the primary ONT no longer broadcasts the discovery message. When detecting again that the quantity of currently accessing edge ONTs is less than the maximum quantity of edge ONTs that are allowed to access the primary ONT, the primary ONT broadcasts the discovery message again.

Optionally, the primary ONT may broadcast the discovery message outwards through all paths for sending a message outwards. For example, the path includes a wireless signal, a PON port, a P2P port, and the like. The PON port indicates that a PON connection is established. The P2P port indicates that a P2P optical fiber connection or a P2P network cable connection is established.

Step 1002: A first edge ONT receives the discovery message broadcast by the primary ONT.

In this embodiment, the first edge ONT receives the discovery message broadcast by the primary ONT, and obtains the first identifier information from the discovery message.

Optionally, the first edge ONT may determine, by switching between a receiving manner of a PON port, a receiving manner of a P2P port, and a receiving manner of a wireless signal, whether to receive the discovery message broadcast by the primary ONT.

It should be noted herein that when wireless of both the primary ONT and the first edge ONT is enabled, the primary ONT and the first edge ONT may communicate with each other by using a wireless signal. When the primary ONT and the first edge ONT are connected by using an optical fiber, the primary ONT and the first edge ONT may communicate with each other in a PON or P2P manner. When the primary ONT and the first edge ONT are connected by using a P2P network cable, the primary ONT and the first edge ONT may communicate with each other in a P2P manner.

Step 1003: After determining that the first identifier information is stored identifier information of a known primary ONT, the first edge ONT sends second identifier information to the primary ONT, where the second identifier information is identifier information of the first edge ONT.

The stored identifier information of a known primary ONT in the first edge ONT is identifier information of a primary ONT that can be accessed, and may be stored in the first edge ONT before delivery. Alternatively, the stored identifier information of a known primary ONT in the first edge ONT may be input by a user after the user connects to the first edge ONT by using a terminal device. The identifier information of a known primary ONT indicates a primary ONT connected to the first edge ONT.

In this embodiment, the first edge ONT determines whether the first identifier information is the stored identifier information of a known primary ONT. When determining that the first identifier information is the stored identifier information of a known primary ONT, the first edge ONT considers that the first edge ONT and the primary ONT are devices in one local area network, and the first edge ONT may obtain the identifier information (namely, the second identifier information) of the first edge ONT, and send the second identifier information to the primary ONT. The second identifier information may be a device serial number, a MAC address, or the like of the first edge ONT.

Optionally, if the first edge ONT receives the discovery message at least by using a PON connection, the first edge ONT sends the second identifier information to the primary ONT by using the PON connection. If the first edge ONT does not receive the discovery message by using a PON connection but receives the discovery message by using at least a P2P optical fiber connection, the first edge ONT sends the second identifier information to the primary ONT by using the P2P optical fiber connection. If the first edge ONT does not receive the discovery message by using a PON connection and a P2P optical fiber connection, but receives the discovery message by using at least a P2P network cable connection, the first edge ONT sends the second identifier information to the primary ONT by using the P2P network cable connection. If the first edge ONT receives the discovery message only by using a wireless connection, the first edge ONT sends the second identifier information to the primary ONT by using the wireless connection. In this way, because the PON connection is more stable, the PON connection is preferentially used, so that reliability of a process of adding an edge ONT is higher.

Step 1004: The primary ONT receives the second identifier information sent by the first edge ONT.

Step 1005: When the second identifier information is stored identifier information of a known edge ONT, the primary ONT sends configuration content to the first edge ONT.

The stored identifier information of a known edge ONT in the primary ONT is identifier information of an edge ONT that can access the primary ONT, and may be stored in the primary ONT before delivery. Alternatively, the stored identifier information of a known edge ONT in the primary ONT may be input by a user after the user connects to the primary ONT by using a terminal device. The identifier information of a known edge ONT indicates an edge ONT allowed to access the primary ONT.

In this embodiment, after receiving the second identifier information, the primary ONT may determine whether the second identifier information belongs to the stored identifier information of a known edge ONT. After determining that the second identifier information belongs to the identifier information of a known edge ONT, the primary ONT considers that the primary ONT and the first edge ONT are devices in one local area network, and the primary ONT may send the configuration content to the first edge ONT. The specific configuration content may be sent by using a configuration message, and the configuration message may be a management control interface (optical network terminal management and control interface, OMCI) message. The configuration content may include a service configuration (such as a video and a voice), a network configuration (such as a used bandwidth), and an operating mode of the first edge ONT. A performed service and the used bandwidth may be preset by a user and configured in the primary ONT.

Step 1006: The first edge ONT receives the configuration content that is sent by the primary ONT after the primary ONT determines, based on the second identifier information, that the first edge ONT is a known edge ONT.

Step 1007: The first edge ONT configures the first edge ONT by using the configuration content.

In this embodiment, after receiving the configuration content sent by the primary ONT, the first edge ONT may configure the operating mode in the configuration content as an operating mode of the first edge ONT. In addition, the first edge ONT respectively configures the service and the used bandwidth that are indicated in the configuration content as a service that can be performed by the first edge ONT and a bandwidth used by the first edge ONT. After the configuration is completed, the first edge ONT may transmit a service packet with the primary ONT.

It should be noted that when a connection between the primary ONT and the first edge ONT is a PON connection, the primary ONT interacts with the first edge ONT by using a PON-specific data frame format. Specifically, when the PON is a PON with a higher speed, such as a gigabit-capable passive optical network (gigabit-capable passive optical network, GPON), a 10-gigabit-capable symmetric passive optical network (10-gigabit-capable symmetric passive optical network, XGS-PON), or a 10-gigabit-capable passive optical network (10-gigabit-capable passive optical network, XG-PON), a packet sent in step 1001 to step 1004 uses a physical layer operation, administration and maintenance (physical layer operation, administration and maintenance, PLOAM) message, and a packet sent in step 1005 and step 1006 uses an OMCI message. When the PON is an EPON with a higher speed, such as an ethernet passive optical network (ethernet passive optical network, EPON), a 10G EPON, or a 25G EPON, the packet sent in step 1001 to step 1004 uses a multi-point control protocol (multi-point control protocol, MPCP) message, and the packet sent in step 1005 and step 1006 uses an OMA message.

When the connection between the primary ONT and the first edge ONT is a P2P optical fiber connection or a P2P network cable connection, the primary ONT and the first edge ONT interact with each other by using a common ethernet packet.

When the connection between the primary ONT and the first edge ONT is a wireless connection, the primary ONT and the first edge ONT are connected and interact with each other in a communication manner defined in the 802.11.

In this way, when an edge ONT is added to the primary ONT, two-way authentication can be implemented, and access of another non-agreed ONT is prevented. Therefore, PON networking is more secure.

It should be noted that, in embodiments of this application, "at least one" includes two cases: "one" and "a plurality of".

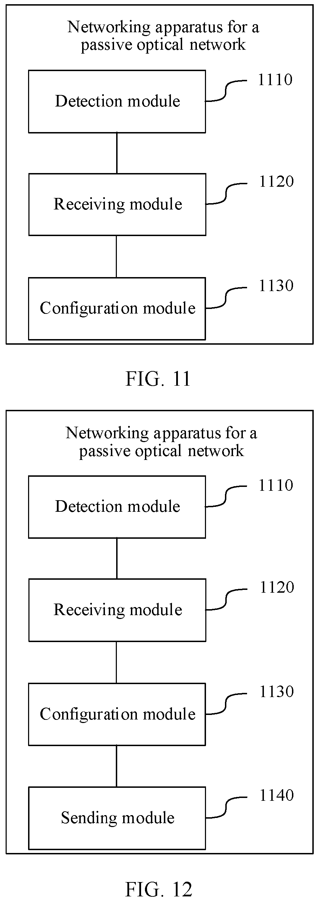

FIG. 11 is a diagram of a structure of a networking apparatus for a PON according to an embodiment of this application. The apparatus may be implemented as a part of the apparatus or the entire apparatus by using software, hardware, or a combination thereof. The apparatus provided in this embodiment of this application may implement the procedure in the embodiment of this application shown in FIG. 5. The apparatus includes a detection module 1110, a receiving module 1120, and a configuration module 1130.

A PON includes a primary ONT and at least one edge ONT, and the at least one edge ONT includes a first edge ONT. The detection module 1110 is configured to detect a networking mode with the primary ONT, and may be specifically configured to implement a detection function in step 501 and perform an implicit step included in step 501.

The receiving module 1120 is configured to: when it is detected that the networking mode is a first networking mode, receive configuration content delivered by the primary ONT, and may be specifically configured to implement a receiving function in step 502 and perform an implicit step included in step 502.

The configuration module 1130 is configured to: when it is detected that the networking mode is the first networking mode, configure the first edge ONT based on the configuration content; or when it is detected that the networking mode is a second networking mode, configure the first edge ONT as a bridge ONT of the primary ONT, or configure the first edge ONT to enter a sleep mode, and may be specifically configured to implement a configuration function in step 503 and execute an implicit step included in step 503.

In a possible implementation, the configuration content includes one or more of an operating mode, a service configuration, or a network configuration. The operating mode is a bridge mode or a routing mode.

In a possible implementation, the detection module 1110 is configured to:
when detecting that the first edge ONT is not powered by the primary ONT, and the first edge ONT is capable of receiving a downlink packet sent by the primary ONT, determine that the networking mode with the primary ONT is the first networking mode; or
when detecting that the first edge ONT is powered by the primary ONT or is connected to the primary ONT through a high-speed interface, determine that the networking mode with the primary ONT is the second networking mode.

In a possible implementation, as shown in FIG. 12, when the operating mode is the routing mode, the apparatus further includes a sending module 1140, configured to:
when a first uplink packet sent by a terminal device connected to the first edge ONT is received, translate a source internet protocol IP address in the first uplink packet into a public network IP address, and forward the first uplink packet on which address translation is performed to the primary ONT; or
when a first downlink packet sent by the primary ONT is received, translate a destination IP address in the first downlink packet into a private network IP address, and forward the first downlink packet on which address translation is performed to a terminal device connected to the first edge ONT.

In a possible implementation, when the operating mode is the bridge mode, or after the first edge ONT is configured as the bridge ONT of the primary ONT, the apparatus further includes a sending module 1140, configured to:
when a second uplink packet sent by a terminal device connected to the first edge ONT is received, forward the second uplink packet to the primary ONT; or
when a second downlink packet sent by the primary ONT is received, forward the second downlink packet to a terminal device connected to the first edge ONT.

In a possible implementation, when it is detected that the networking mode is the first networking mode, the receiving module 1120 is further configured to:
receive a discovery message broadcast by the primary ONT, where the discovery message includes first identifier information, and the first identifier information is identifier information of the primary ONT.

The apparatus further includes the sending module 1140, configured to: after it is determined that the first identifier information is stored identifier information of a known primary ONT, send second identifier information to the primary ONT, where the second identifier information is identifier information of the first edge ONT.

The receiving module 1120 is configured to receive the configuration content that is sent by the primary ONT after the primary ONT determines, based on the second identifier information, that the first edge ONT is a known edge ONT.

In a possible implementation, when it is detected that the networking mode with the primary ONT is the first networking mode, a connection between the first edge ONT and the primary ONT is one or more of a PON connection, a P2P optical fiber connection, a P2P cable connection, or a wireless connection.

In a possible implementation, when it is detected that the networking mode is the second networking mode, the first edge ONT is inserted into a physical interface of the primary ONT.

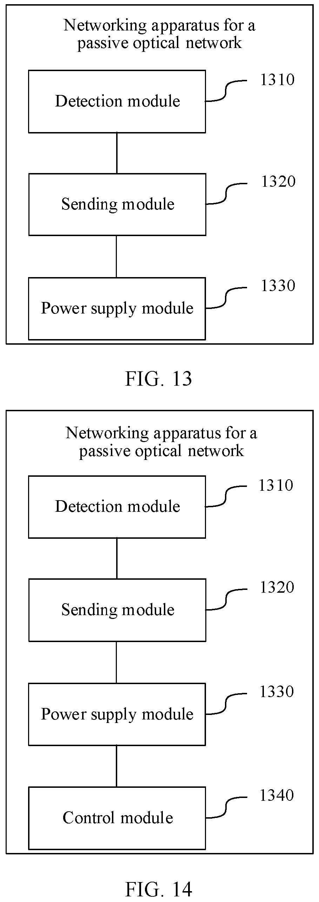

FIG. 13 is a diagram of a structure of a networking apparatus for a PON according to an embodiment of this application. The apparatus may be implemented as a part of the apparatus or the entire apparatus by using software, hardware, or a combination thereof. The apparatus provided in this embodiment of this application may implement the procedure in the embodiment of this application shown in FIG. 6. The apparatus includes a detection module 1310, a sending module 1320, and a power supply module 1330.

A PON includes a primary ONT and at least one edge ONT, and the at least one edge ONT includes a first edge ONT. The detection module 1310 is configured to detect a networking mode, and may be specifically configured to implement a detection function in step 601 and perform an implicit step included in step 601.

The sending module 1320 is configured to: when it is detected that the networking mode is a first networking mode, deliver configuration content to the first edge ONT, and may be specifically configured to implement a sending function in step 602 and perform an implicit step included in step 602.

The power supply module 1330 is configured to: when it is detected that the networking mode is a second networking mode, power the first edge ONT, and may be specifically configured to implement a power supply function in step 603 and perform an implicit step included in step 603.

In a possible implementation, the detection module 1310 is configured to:
when detecting that a target function is enabled, determine that the networking mode is the first networking mode; or
when detecting that a target function is not enabled, determine that the networking mode is the second networking mode, where the target function is a function for managing the at least one edge ONT.

In a possible implementation, as shown in FIG. 14, when it is detected that the networking mode is the first networking mode, the apparatus further includes:
a control module 1340, configured to control a power supply function of the primary ONT to be disabled, or control the primary ONT to hibernate, where the power supply function is for powering the at least one edge ONT.

In a possible implementation, the configuration content includes one or more of an operating mode, a service configuration, or a network configuration. The operating mode is a bridge mode or a routing mode.

In a possible implementation, the sending module 1320 is further configured to:
broadcast a discovery message, where the discovery message includes first identifier information, and the first identifier information is identifier information of the primary ONT.

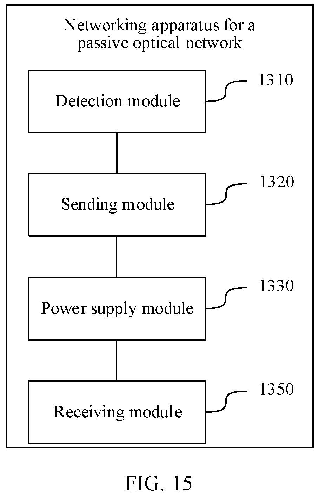

As shown in FIG. 15, the apparatus further includes a receiving module 1350, configured to receive second identifier information sent by the first edge ONT, where the second identifier information is identifier information of the first edge ONT.

The sending module 1320 is configured to: when the second identifier information is stored identifier information of a known edge ONT, send the configuration content to the first edge ONT.

Division into the modules in this embodiment of this application is an example, and is merely logical function division. During actual implementation, another division manner may be used. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module.

In the foregoing embodiment, all or a part of the software, hardware, firmware, or any combination thereof may be implemented. When the software is used for implementation, all or a part of the implementation may be implemented in a form of a computer program product. The computer program product includes one or more computer instructions. When the computer program instructions are loaded and executed on an ONT (where the ONT is an edge ONT or a primary ONT), all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible to an ONT (where the ONT is an edge ONT or a primary ONT), or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), or a semiconductor medium (for example, a solid-state drive).

## Claims

1. A networking method for a passive optical network PON, wherein the PON comprises a primary optical network terminal ONT and at least one edge ONT, and the at least one edge ONT comprises a first edge ONT, and the method comprises:
detecting (501), by the first edge ONT, a networking mode with the primary ONT;
when detecting (502) that the first edge ONT is not powered by the primary ONT, and the first edge ONT is capable of receiving a downlink packet sent by the primary ONT, the first edge ONT determines that the networking mode with the primary ONT is a first networking mode, receives configuration content delivered by the primary ONT, and configures the first edge ONT based on the configuration content; or
when detecting (503) that the first edge ONT is powered by the primary ONT or is connected to the primary ONT through a high-speed interface, the first edge ONT determines that the networking mode with the primary ONT is a second networking mode, and configures the first edge ONT as a bridge ONT of the primary ONT, or enters a sleep mode.

2. The method according to claim 1, wherein the configuration content comprises one or more of an operating mode, a service configuration, or a network configuration, wherein the operating mode is a bridge mode or a routing mode.

3. The method according to claim 1 or 2, wherein the detecting, by the first edge ONT, a networking mode with the primary ONT comprises:
when the first edge ONT detects that the first edge ONT is not powered by the primary ONT, and the first edge ONT is capable of receiving a downlink packet sent by the primary ONT, determining, by the first edge ONT, that the networking mode with the primary ONT is the first networking mode; or
when the first edge ONT detects that the first edge ONT is powered by the primary ONT or is connected to the primary ONT through a high-speed interface, determining, by the first edge ONT, that the networking mode with the primary ONT is the second networking mode.

4. The method according to claim 2, wherein when the operating mode is the routing mode, the method further comprises:
when receiving a first uplink packet sent by a terminal device connected to the first edge ONT, translating, by the first edge ONT, a source internet protocol IP address in the first uplink packet into a public network IP address, and forwarding the first uplink packet on which address translation is performed to the primary ONT; or
when receiving a first downlink packet sent by the primary ONT, translating, by the first edge ONT, a destination IP address in the first downlink packet into a private network IP address, and forwarding the first downlink packet on which address translation is performed to a terminal device connected to the first edge ONT.

5. The method according to claim 2, wherein when the operating mode is the bridge mode, or after the first edge ONT is configured as the bridge ONT of the primary ONT, the method further comprises:
when receiving a second uplink packet sent by a terminal device connected to the first edge ONT, forwarding, by the first edge ONT, the second uplink packet to the primary ONT; or
when receiving a second downlink packet sent by the primary ONT, forwarding, by the first edge ONT, the second downlink packet to a terminal device connected to the first edge ONT.

6. The method according to any one of claims 1 to 5, wherein when the first edge ONT detects that the networking mode is the first networking mode, the method further comprises:
receiving, by the first edge ONT, a discovery message broadcast by the primary ONT, wherein the discovery message comprises first identifier information, and the first identifier information is identifier information of the primary ONT; and
after determining that the first identifier information is stored identifier information of a known primary ONT, sending, by the first edge ONT, second identifier information to the primary ONT, wherein the second identifier information is identifier information of the first edge ONT; and
the receiving, by the first edge ONT, configuration content delivered by the primary ONT comprises:
receiving, by the first edge ONT, the configuration content that is sent by the primary ONT after the primary ONT determines, based on the second identifier information, that the first edge ONT is a known edge ONT.

7. The method according to any one of claims 1 to 6, wherein when the first edge ONT detects that the networking mode with the primary ONT is the first networking mode, a connection between the first edge ONT and the primary ONT is one or more of a PON connection, a peer-to-peer P2P optical fiber connection, a P2P network cable connection, or a wireless connection.

8. The method according to any one of claims 1 to 7, wherein when the first edge ONT detects that the networking mode is the second networking mode, the first edge ONT is inserted into a physical interface of the primary ONT.

9. A networking method for a passive optical network PON, wherein the PON comprises a primary optical network terminal ONT and at least one edge ONT, and the at least one edge ONT comprises a first edge ONT, and the method comprises:
detecting (601), by the primary ONT, a networking mode; and
when detecting (602) that a target function is enabled, the primary ONT determines that the networking mode is a first networking mode and delivers configuration content to the first edge ONT; or
when detecting (603) that a target function is not enabled, the primary ONT determines that the networking mode is a second networking mode, where a target function is an OLT function for managing an edge ONT, and powers the first edge ONT.

10. The method according to claim 9, wherein the detecting, by the primary ONT, a networking mode comprises:
when detecting that a target function is enabled, determining, by the primary ONT, that the networking mode is the first networking mode; or
when detecting that a target function is not enabled, determining, by the primary ONT, that the networking mode is the second networking mode, wherein the target function is a function for managing the at least one edge ONT.

11. The method according to claim 9 or 10, wherein when the primary ONT detects that the networking mode is the first networking mode, the method further comprises:
controlling, by the primary ONT, a power supply function of the primary ONT to be disabled, or hibernating, wherein the power supply function is for powering the at least one edge ONT.

12. The method according to any one of claims 9 to 11, wherein the configuration content comprises one or more of an operating mode, a service configuration, or a network configuration, wherein the operating mode is a bridge mode or a routing mode.

13. The method according to any one of claims 9 to 11, wherein when the primary ONT detects that the networking mode is the first networking mode, the method further comprises:
broadcasting, by the primary ONT, a discovery message, wherein the discovery message comprises first identifier information, and the first identifier information is identifier information of the primary ONT; and
receiving, by the primary ONT, second identifier information sent by the first edge ONT, wherein the second identifier information is identifier information of the first edge ONT; and
the delivering configuration content to the first edge ONT comprises: when the second identifier information is stored identifier information of a known edge ONT, sending, by the primary ONT, the configuration content to the first edge ONT.

14. An edge optical network terminal ONT, wherein the edge ONT comprises means adapted to implement the method according to any one of claims 1 to 8.

15. A primary optical network terminal ONT, wherein the primary ONT comprises means adapted to implement the method according to any one of claims 9 to 13.

## Patentansprüche

1. Vernetzungsverfahren für ein passives optisches Netzwerk PON, wobei das PON ein primäres optisches Netzwerkterminal ONT und mindestens ein Edge-ONT umfasst und das mindestens eine Edge-ONT ein erstes Edge-ONT umfasst und das Verfahren Folgendes umfasst:
Erkennen (501) eines Netzwerkmodus mit dem primären ONT durch das erste Edge-ONT;
beim Erkennen (502), dass das erste Edge-ONT nicht von dem primären ONT gespeist wird, und wenn das erste Edge-ONT in der Lage ist, ein von dem primären ONT gesendetes Downlink-Paket zu empfangen, bestimmt das erste Edge-ONT, dass der Netzwerkmodus mit dem primären ONT ein erster Netzwerkmodus ist, empfängt von dem primären ONT bereitgestellte Konfigurationsinhalte und konfiguriert das erste Edge-ONT basierend auf den Konfigurationsinhalten; oder
beim Erkennen (503), dass das erste Edge-ONT von dem primären ONT gespeist wird oder durch eine Hochgeschwindigkeitsschnittstelle mit dem primären ONT verbunden ist, bestimmt das erste Edge-ONT, dass der Netzwerkmodus mit dem primären ONT ein zweiter Netzwerkmodus ist und konfiguriert das erste Edge-ONT als Bridge-ONT des primären ONT oder wechselt in einen Ruhemodus.

2. Verfahren nach Anspruch 1, wobei die Konfigurationsinhalte eins oder mehrere der folgenden Elemente umfassen: einen Betriebsmodus, eine Servicekonfiguration oder eine Netzwerkkonfiguration, wobei der Betriebsmodus ein Bridge-Modus oder ein Routing-Modus ist.

3. Verfahren nach Anspruch 1 oder 2, wobei das Erkennen eines Netzwerkmodus mit dem primären ONT durch das erste Edge-ONT Folgendes umfasst:
wenn das erste Edge-ONT erkennt, dass das erste Edge-ONT nicht von dem primären ONT gespeist wird und das erste Edge-ONT in der Lage ist, ein von dem primären ONT gesendetes Downlink-Paket zu empfangen, Bestimmen durch das erste Edge-ONT, dass der Netzwerkmodus mit dem primären ONT der erste Netzwerkmodus ist; oder
wenn das erste Edge-ONT erkennt, dass das erste Edge-ONT von dem primären ONT gespeist wird oder durch eine Hochgeschwindigkeitsschnittstelle mit dem primären ONT verbunden ist, Bestimmen durch das erste Edge-ONT, dass der Netzwerkmodus mit dem primären ONT der zweite Netzwerkmodus ist.

4. Verfahren nach Anspruch 2, wobei das Verfahren, wenn der Betriebsmodus der Routing-Modus ist, ferner Folgendes umfasst:
beim Empfangen eines von einem mit dem ersten Edge-ONT verbundenen Endgeräts gesendeten ersten Uplink-Pakets Übersetzen einer Quell-Internetprotokoll-IP-Adresse in dem ersten Uplink-Paket in eine öffentliche Netzwerk-IP-Adresse durch das erste Edge-ONT und Weiterleiten des ersten Uplink-Pakets, an dem die Adressübersetzung durchgeführt wurde, an das primäre ONT; oder
beim Empfangen eines von dem primären ONT gesendeten ersten Downlink-Pakets Übersetzen einer Ziel-IP-Adresse in dem ersten Downlink-Paket in eine private Netzwerk-IP-Adresse durch das erste Edge-ONT und Weiterleiten des ersten Downlink-Pakets, an dem die Adressübersetzung durchgeführt wurde, an ein mit dem ersten Edge-ONT verbundenes Endgerät.

5. Verfahren nach Anspruch 2, wobei das Verfahren, wenn der Betriebsmodus der Bridge-Modus ist oder nachdem das erste Edge-ONT als Bridge-ONT des primären ONT konfiguriert wurde, ferner Folgendes umfasst:
beim Empfangen eines von einem mit dem ersten Edge-ONT verbundenen Endgerät gesendeten zweiten Uplink-Pakets Weiterleiten des zweiten Uplink-Pakets an das primäre ONT, durch das erste Edge-ONT; oder
beim Empfangen eines von dem primären ONT gesendeten zweiten Downlink-Pakets Weiterleiten des zweiten Downlink-Pakets durch das erste Edge-ONT an ein mit dem ersten Edge-ONT verbundenes Endgerät.

6. Verfahren nach einem der Ansprüche 1 bis 5, wobei das Verfahren, wenn das erste Edge-ONT erkennt, dass der Netzwerkmodus der erste Netzwerkmodus ist, ferner Folgendes umfasst:
Empfangen einer von dem primären ONT übermittelten Discovery-Message durch das erste Edge-ONT, wobei die Discovery-Message erste Kennungsinformationen enthält und die ersten Kennungsinformationen Kennungsinformationen des primären ONT sind; und
nach dem Bestimmen, dass die ersten Kennungsinformationen gespeicherte Kennungsinformationen eines bekannten primären ONT sind, Senden zweiter Kennungsinformationen an das primäre ONT durch das erste Edge-ONT, wobei die zweiten Kennungsinformationen Kennungsinformationen des ersten Edge-ONT sind; und
das Empfangen der von dem primären ONT bereitgestellten Konfigurationsinhalte durch das erste Edge-ONT Folgendes umfasst:
Empfangen der von dem primären ONT gesendeten Konfigurationsinhalte durch das erste Edge-ONT, nachdem das primäre ONT basierend auf den zweiten Kennungsinformationen bestimmt hat, dass das erste Edge-ONT ein bekanntes Edge-ONT ist.

7. Verfahren nach einem der Ansprüche 1 bis 6, wobei, wenn das erste Edge-ONT erkennt, dass der Netzwerkmodus mit dem primären ONT der erste Netzwerkmodus ist, eine Verbindung zwischen dem ersten Edge-ONT und dem primären ONT eine oder mehrere der folgenden Verbindungen ist: eine PON-Verbindung, eine Peer-to-Peer-P2P-Glasfaserverbindung, eine P2P-Netzwerkkabelverbindung oder eine drahtlose Verbindung.

8. Verfahren nach einem der Ansprüche 1 bis 7, wobei das erste Edge-ONT, wenn das erste Edge-ONT erkennt, dass der Netzwerkmodus der zweite Netzwerkmodus ist, in eine physische Schnittstelle des primären ONT eingefügt wird.

9. Vernetzungsverfahren für ein passives optisches Netzwerk PON, wobei das PON ein primäres optisches Netzwerkterminal ONT und mindestens ein Edge-ONT umfasst und das mindestens eine Edge-ONT ein erstes Edge-ONT umfasst und das Verfahren Folgendes umfasst:
Erkennen (601) eines Netzwerkmodus durch das primäre ONT; und wobei
das primäre ONT beim Erkennen (602), dass eine Zielfunktion aktiviert ist, bestimmt, dass der Netzwerkmodus ein erster Netzwerkmodus ist und dem ersten Edge-ONT Konfigurationsinhalte bereitstellt; oder
das primäre ONT beim Erkennen (603), dass eine Zielfunktion nicht aktiviert ist, bestimmt, dass der Netzwerkmodus ein zweiter Netzwerkmodus ist, bei dem eine Zielfunktion eine OLT-Funktion zum Verwalten eines Edge-ONT ist, und das erste Edge-ONT speist.

10. Verfahren nach Anspruch 9, wobei das Erkennen eines Netzwerkmodus durch das primäre ONT Folgendes umfasst:
wenn erkannt wird, dass eine Zielfunktion aktiviert ist, Bestimmen durch das primäre ONT, dass der Netzwerkmodus der erste Netzwerkmodus ist; oder
wenn erkannt wird, dass eine Zielfunktion nicht aktiviert ist, Bestimmen durch das primäre ONT, dass der Netzwerkmodus der zweite Netzwerkmodus ist, wobei die Zielfunktion eine Funktion zum Verwalten des mindestens einen Edge-ONT ist.

11. Verfahren nach Anspruch 9 oder 10, wobei das Verfahren, wenn das primäre ONT erkennt, dass der Netzwerkmodus der erste Netzwerkmodus ist, ferner Folgendes umfasst:
Steuern durch das primäre ONT, dass eine Stromversorgungsfunktion des primären ONT zu deaktivieren oder in den Ruhemodus zu schalten ist, wobei die Stromversorgungsfunktion dem Speisen des mindestens einen Edge-ONT dient.

12. Verfahren nach einem der Ansprüche 9 bis 11, wobei die Konfigurationsinhalte eins oder mehrere der folgenden Elemente umfassen: einen Betriebsmodus, eine Servicekonfiguration oder eine Netzwerkkonfiguration, wobei der Betriebsmodus ein Bridge-Modus oder ein Routing-Modus ist.

13. Verfahren nach einem der Ansprüche 9 bis 11, wobei das Verfahren, wenn das primäre ONT erkennt, dass der Netzwerkmodus der erste Netzwerkmodus ist, ferner Folgendes umfasst:
Übertragen einer Discovery-Message durch das primäre Edge-ONT, wobei die Discovery-Message erste Kennungsinformationen enthält und die ersten Kennungsinformationen Kennungsinformationen des primären ONT sind; und
Empfangen zweiter von dem ersten Edge-ONT gesendeter Kennungsinformationen durch das primäre ONT, wobei die zweiten Kennungsinformationen Kennungsinformationen des ersten Edge-ONT sind, und
das Bereitstellen von Konfigurationsinhalten an das erste Edge-ONT Folgendes umfasst:
wenn die zweiten Kennungsinformationen gespeicherte Kennungsinformationen eines bekannten Edge-ONT sind, Senden der Konfigurationsinhalte durch das primäre ONT an das erste Edge-ONT.

14. Optisches Edge-Netzwerkterminal ONT, wobei das Edge-ONT Mittel umfasst, die geeignet sind, um das Verfahren nach einem der Ansprüche 1 bis 8 umzusetzen.

15. Primäres optisches Netzwerkendgerät ONT, wobei das primäre ONT Mittel umfasst, die geeignet sind, um das Verfahren nach einem der Ansprüche 9 bis 13 umzusetzen.

## Revendications

1. Procédé de réseautage pour un réseau optique passif, PON, dans lequel le PON comprend un terminal de réseau optique, ONT, principal et au moins un ONT périphérique, et l'au moins un ONT périphérique comprend un premier ONT périphérique, et le procédé comprend :
la détection (501), par le premier ONT périphérique, d'un mode de réseautage avec l'ONT principal ;
lors de la détection (502) que le premier ONT périphérique n'est pas alimenté par l'ONT principal, et que le premier ONT périphérique est capable de recevoir un paquet de liaison descendante envoyé par l'ONT principal, le premier ONT périphérique détermine que le mode de réseautage avec l'ONT principal est un premier mode de réseautage, reçoit le contenu de configuration fourni par l'ONT principal, et configure le premier ONT périphérique sur la base du contenu de configuration ; ou
lors de la détection (503) que le premier ONT périphérique est alimenté par l'ONT principal ou est connecté à l'ONT principal via une interface à haut débit, le premier ONT périphérique détermine que le mode de réseautage avec l'ONT principal est un second mode de réseautage, et configure le premier ONT périphérique comme un ONT de pont de l'ONT principal, ou entre en mode veille.

2. Procédé selon la revendication 1, dans lequel le contenu de configuration comprend l'un ou plusieurs d'un mode de fonctionnement, d'une configuration de service, ou d'une configuration de réseau, dans lequel le mode de fonctionnement est un mode pont ou un mode de routage.

3. Procédé selon la revendication 1 ou 2, dans lequel la détection, par le premier ONT périphérique, d'un mode de réseautage avec l'ONT principal comprend :
lorsque le premier ONT périphérique détecte que le premier ONT périphérique n'est pas alimenté par l'ONT principal, et que le premier ONT périphérique est capable de recevoir un paquet de liaison descendante envoyé par l'ONT principal, la détermination, par le premier ONT périphérique, que le mode de réseautage avec l'ONT principal est le premier mode de réseautage ; ou
lorsque le premier ONT périphérique détecte que le premier ONT périphérique est alimenté par l'ONT principal ou est connecté à l'ONT principal via une interface à haut débit, la détermination, par le premier ONT périphérique, que le mode de réseautage avec l'ONT principal est le second mode de réseautage.

4. Procédé selon la revendication 2, dans lequel, lorsque le mode de fonctionnement est le mode de routage, le procédé comprend également :
lors de la réception d'un premier paquet de liaison montante envoyé par un dispositif terminal connecté au premier ONT périphérique, la traduction, par le premier ONT périphérique, d'une adresse de protocole Internet, IP, source dans le premier paquet de liaison montante en une adresse IP de réseau public, et la transmission du premier paquet de liaison montante sur lequel la traduction d'adresse est réalisée à l'ONT principal ; ou
lors de la réception d'un premier paquet de liaison descendante envoyé par l'ONT principal, la traduction, par le premier ONT périphérique, d'une adresse IP de destination dans le premier paquet de liaison descendante en une adresse IP de réseau privé, et la transmission du premier paquet de liaison descendante sur lequel la traduction d'adresse est réalisée à un dispositif terminal connecté au premier l'ONT périphérique.

5. Procédé selon la revendication 2, dans lequel, lorsque le mode de fonctionnement est le mode pont, ou après que le premier ONT périphérique a été configuré comme l'ONT de pont de l'ONT principal, le procédé comprend également :
lors de la réception d'un second paquet de liaison montante envoyé par un dispositif terminal connecté au premier ONT périphérique, la transmission, par le premier ONT périphérique, du second paquet de liaison montante à l'ONT principal ; ou
lors de la réception d'un second paquet de liaison descendante envoyé par l'ONT principal, la transmission, par le premier ONT périphérique, du second paquet de liaison descendante à un dispositif terminal connecté au premier ONT périphérique.

6. Procédé selon l'une quelconque des revendications 1 à 5, dans lequel, lorsque le premier ONT périphérique détecte que le mode de réseautage est le premier mode de réseautage, le procédé comprend également :
la réception, par le premier ONT périphérique, d'un message de découverte diffusé par l'ONT principal, dans lequel le message de découverte comprend de premières informations d'identifiant, et les premières informations d'identifiant sont des informations d'identifiant de l'ONT principal ; et
après avoir déterminé que les premières informations d'identifiant sont des informations d'identifiant stockées d'un ONT principal connu, l'envoi, par le premier ONT périphérique, de secondes informations d'identifiant à l'ONT principal, dans lequel les secondes informations d'identifiant sont des informations d'identifiant du premier ONT périphérique ; et
la réception, par le premier ONT périphérique, du contenu de configuration fourni par l'ONT principal comprend :
la réception, par le premier ONT périphérique, du contenu de configuration qui est envoyé par l'ONT principal après que l'ONT principal a déterminé, sur la base des secondes informations d'identifiant, que le premier ONT périphérique est un ONT périphérique connu.

7. Procédé selon l'une quelconque des revendications 1 à 6, dans lequel lorsque le premier ONT périphérique détecte que le mode de réseautage avec l'ONT principal est le premier mode de réseautage, une connexion entre le premier ONT périphérique et l'ONT principal est une ou plusieurs connexions parmi une connexion PON, une connexion par fibre optique pair à pair P2P, une connexion par câble réseau P2P ou une connexion sans fil.

8. Procédé selon l'une quelconque des revendications 1 à 7, dans lequel lorsque le premier ONT périphérique détecte que le mode de réseautage est le second mode de réseautage, le premier ONT périphérique est inséré dans une interface physique de l'ONT principal.

9. Procédé de réseautage pour un réseau optique passif, PON, dans lequel le PON comprend un terminal de réseau optique, ONT, principal et au moins un ONT périphérique, et l'au moins un ONT périphérique comprend un premier ONT périphérique, et le procédé comprend :
la détection (601), par l'ONT principal, d'un mode de réseautage ; et
lors de la détection (602) qu'une fonction cible est activée, l'ONT principal détermine que le mode de réseautage est un premier mode de réseautage et fournit le contenu de configuration au premier ONT périphérique ; ou
lors de la détection (603) qu'une fonction cible n'est pas activée, l'ONT principal détermine que le mode de réseautage est un second mode de réseautage, où une fonction cible est une fonction OLT pour gérer un ONT périphérique, et alimente le premier ONT périphérique.

10. Procédé selon la revendication 9, dans lequel la détection, par l'ONT principal, d'un mode de réseautage comprend :
lors de la détection qu'une fonction cible est activée, la détermination, par l'ONT principal, que le mode de réseautage est le premier mode de réseautage ; ou
lors de la détection qu'une fonction cible n'est pas activée, la détermination, par l'ONT principal, que le mode de réseautage est le second mode de réseautage, dans lequel la fonction cible est une fonction de gestion de l'au moins un ONT périphérique.

11. Procédé selon la revendication 9 ou 10, dans lequel, lorsque l'ONT principal détecte que le mode de réseautage est le premier mode de réseautage, le procédé comprend également :
la commande, par l'ONT principal, d'une fonction d'alimentation électrique de l'ONT principal à désactiver, ou la mise en veille prolongée, dans lequel la fonction d'alimentation électrique est destinée à alimenter l'au moins un ONT périphérique.

12. Procédé selon l'une quelconque des revendications 9 à 11, dans lequel le contenu de configuration comprend l'un ou plusieurs d'un mode de fonctionnement, d'une configuration de service, ou d'une configuration de réseau, dans lequel le mode de fonctionnement est un mode pont ou un mode de routage.

13. Procédé selon l'une quelconque des revendications 9 à 11, dans lequel, lorsque l'ONT principal détecte que le mode de réseautage est le premier mode de réseautage, le procédé comprend également :
la diffusion, par l'ONT principal, d'un message de découverte, dans lequel le message de découverte comprend de premières informations d'identifiant, et les premières informations d'identifiant sont des informations d'identifiant de l'ONT principal ; et
la réception, par l'ONT principal, de secondes informations d'identifiant envoyées par le premier ONT périphérique, dans lequel les secondes informations d'identifiant sont des informations d'identifiant du premier ONT périphérique ; et
la fourniture du contenu de configuration au premier ONT périphérique comprend :
lorsque les secondes informations d'identifiant sont des informations d'identifiant stockées d'un ONT périphérique connu, l'envoi, par l'ONT principal, du contenu de configuration au premier ONT périphérique.

14. Terminal de réseau optique, ONT, périphérique dans lequel l'ONT périphérique comprend des moyens adaptés pour mettre en œuvre le procédé selon l'une quelconque des revendications 1 à 8.

15. Terminal de réseau optique, ONT, principal dans lequel l'ONT principal comprend des moyens adaptés pour mettre en œuvre le procédé selon l'une quelconque des revendications 9 à 13.
